# EUROPÄISCHE PATENTSCHRIFT

(11) **EP 0 396 503 B1**
(45) Veröffentlichungstag und Bekanntmachung des Hinweises auf die Patenterteilung: **18.10.1995**
(21) Anmeldenummer: 90810321.1
(22) Anmeldetag: 24.04.1990
(51) Int. Cl.: C11D 3/42

(54) **Lagerstabile wässrige Aufhellerformulierungen**
Storage stable aqueous formulations containing optical brighteners
Formulations aqueuses stables au stockage contenant des azurants optiques

(30) Priorität: 02.05.1989 CH 1664/89
(43) Veröffentlichungstag der Anmeldung: 07.11.1990
(73) Patentinhaber: CIBA-GEIGY AG, 4002 Basel (CH)
(72) Erfinder: Kühl, Eickhard, D-7888 Rheinfelden-Eichsel (DE)

(56) Entgegenhaltungen:
- EP-A- 0 073 996
- DD-A- 156 874
- DE-A- 1 594 863
- DE-A- 1 926 279
- SOVIET INVENTIONS ILLUSTRATED Sektion Chemie, Woche C 34, Zusammenfassung Nr. 59886C/34 F06A60E34, 1. Oktober 1980, Derwent Publications Ltd., London, GB; & SU-A-637686

## Beschreibung

Die vorliegende Erfindung betrifft lagerstabile, wässrige Aufhellerformulierungen, ein Verfahren zu deren Herstellung und deren Verwendung.

Optische Aufheller werden heutzutage vermehrt als wässrige Lösungen in den Handel gebracht. Im Falle von Aufhellern der Pyrazolinreihe insbesondere kationischen beobachtet man eine stetige Gelbverfärbung derartiger Lösungen bei der Lagerung.

In EP-A-0 073 996 sind die Lactate von spezifischen Pyrazolin-Aufhellern beschrieben sowie deren Flüssigformulierungen. Auf Seite 6, Zeilen 4 bis 7 ist beschrieben, dass die Lactate eine gute Verträglichkeit mit reduktiv wirkenden Mitteln zeigen, wie sie beim Weisstönen von Wolle/Acrylfasermischungen Verwendung finden. Es gibt aber keinen Hinweis in EP-A-0 073 996, die Herstellung einer lagerstabilen, wässrigen Aufhellerformulierung betreffend, die bei der Lagerung zu keiner Gelbverfärbung führt.

Es wurde nun überraschenderweise gefunden, dass man das "Verfärben" der Lösungen verhindern oder zumindest stark verzögern kann, wenn man der wässrigen Lösung des optischen Aufhellers eine reduzierend wirkende Schwefelverbindung zusetzt.

Die Formulierungen gemäss der Erfindung enthalten demnach
a) einen optischen Aufheller der Pyrazolinreihe,
b) gegebenenfalls Hilfsstoffe und
c) Wasser, und sind dadurch gekennzeichnet dass sie zusaätzlich
d) 0,1 - 10 Mol%, bezogen auf den Aufheller, einer reduzierend wirkenden Schwefelverbindung enthalten.

Diese Formulierungen stellen vorzugsweise Lösungen dar.

Beispielsweise handelt es sich bei den optischen Aufhellern der Pyrazolinreihe um jene der Formel 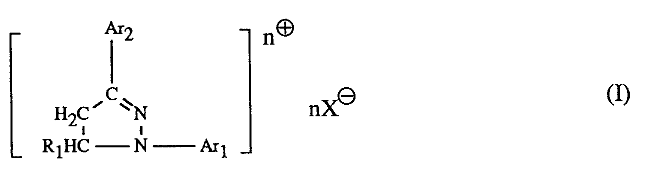
worin Ar₁ und Ar₂ unabhängig voneinander substituierte oder unsubstituierte Arylreste, R₁ Wasserstoff oder Methyl, n Null oder 1 und X ein farbloses Anion bedeuten.

Von besonderem Interesse sind: 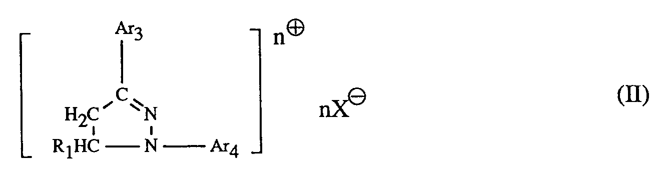
worin Ar₃ und Ar₄ unabhängig voneinander Phenyl-, Diphenyl- oder Naphthylreste bedeuten, die weitere Substituenten wie Hydroxy, C₁-C₆-Alky-, C₁-C₆-Alkoxy-, Hydroxyalkyl-, Amino-, Alkylamino-, Acylamino-, Carboxyl-, Sulfonsäure-, Sulfonyl- und Sulfonamidgruppen einschliesslich der veresterten Derivate und/oder Halogenatome tragen können, R₁, n und X die obige Bedeutung haben.

Besonders zu erwähnen sind: 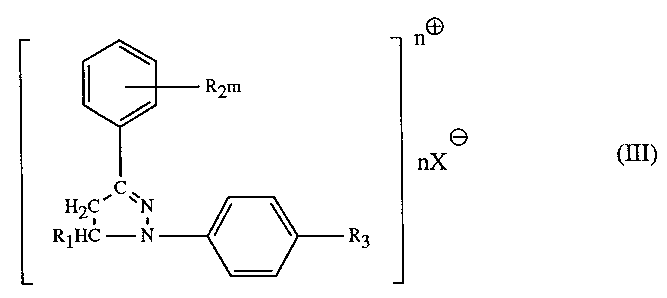
worin R₂ Wasserstoff, Halogen oder C₁-C₆-Alkyl, R₃ eine substituierte oder unsubstituierte C₁-C₆-Alkyloxycarbonyl-, C₁-C₆-Alkylsulfonyl-, Sulfonamid- oder eine Sulfonyl-Gruppe, m Null, 1, 2 oder 3 bedeuten, und R₁, n und X die obige Bedeutung haben.

Besonders bevorzugt sind: 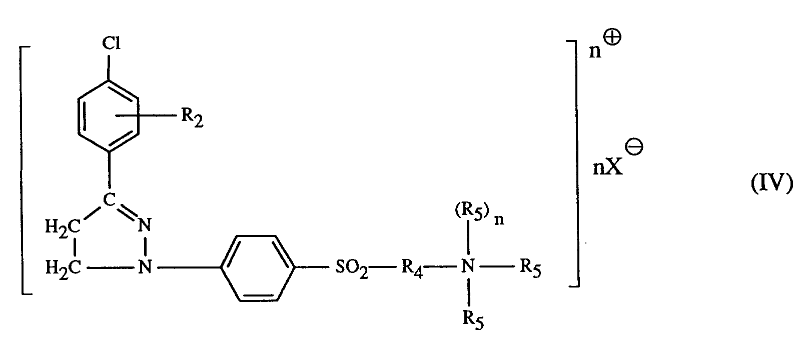
worin R₄ substituiertes oder unsubstituiertes C₁-C₆-Alkyl, C₁-C₆-Alkylen-oxy-C₁-C₆-alkylen, C₁-C₆-Alkylen-CONH-C₁-C₆-alkylen und R₅ unabhängig voneinander substituiertes oder unsubstituiertes C₁-C₆-Alkyl oder Wasserstoff bedeutet und R₂, n und X obige Bedeutung haben.

Ganz besonders bevorzugt enthalten die Formulierungen
a) einen kationischen, optischen Aufheller der Reihe der 1,3-Diphenyl-2-pyrazoline,
b) gegebenenfalls Hilfsstoffe,
c) Wasser und
d) 0,1 - 10 Mol%, bezogen auf den Aufheller, einer oder mehrerer reduzierend wirkenden Schwefelverbindungen.

Beispielsweise handelt es sich bei den optischen Aufhellem der 1,3-Diphenyl-2-pyrazoline um kationische Vertreter der Formel 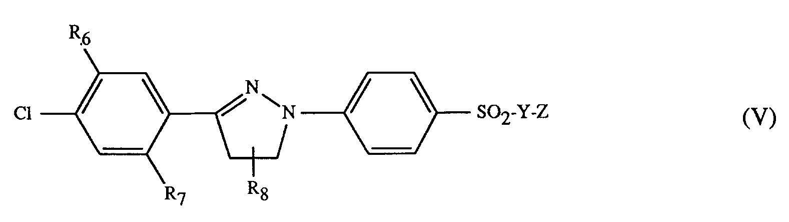
wobei Y ein Brückenglied und Z eine Dialkylamino-, Di-(hydroxyäthyl)amino-, Morpholino-, Pyrrolidino-, Piperidino-, N-Alkylpiperazino-, N-Hydroxyäthyl-piperazino- oder eine Alkylmercaptogruppe darstellen, die protoniert oder quaterniert sind. Die Brückenglieder Y können geradkettige oder verzweigte Alkylen-, Sulfonyl-, Sulfonamid-, Carbonamid-, Carboxyl-, Amino-, Hydroxyalkylen-gruppen, R₆ und R₇ unabhängig voneinander H, Methyl oder Chlor und R₈ C₁-C₄-Alkyl oder Phenyl bedeuten.

Hervorzuheben sind Verbindungen der Formel 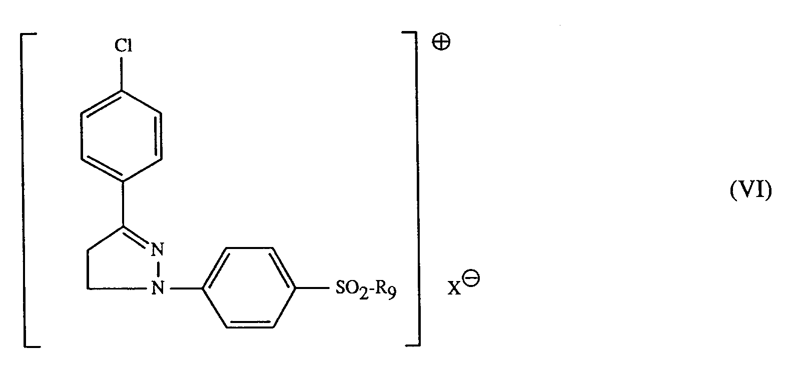
worin R₉ ein basischer Rest 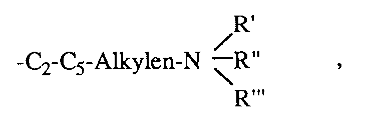 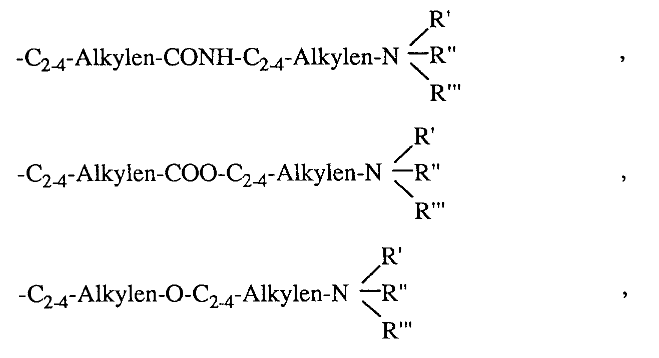 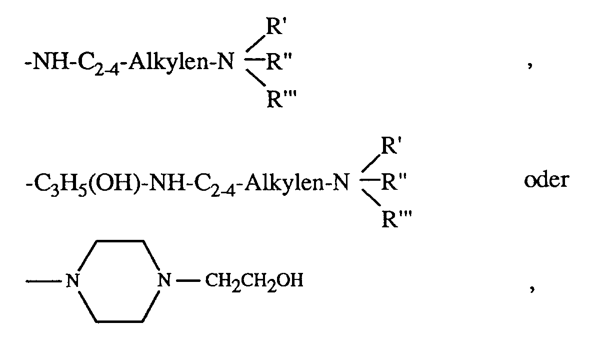
X⁻ ein farbloses Anion einer organischen oder anorganischen Säure, R', R'', R''' unabhängig voneinander H, -CH₃, -C₂H₅ oder -CH₂CH₂OH, wovon 2 Reste zusammen auch einen Pyrrolidin-, Piperidin-, N-Methylpiperazin- oder Morpholinring bilden können, bedeuten. Ein Rest ist vorzugsweise Wasserstoff.

Als Halogene kommen vor allem Fluor, Chlor und Brom in Frage, insbesondere jedoch Chlor.

Als C₁-C₆-Alkylreste kommen unverzweigte und verzweigte Alkylreste, wie der Methyl-, Ethyl-, Propyl-, Butyl-, Pentyl- und Hexylrest in Betracht.

Farblose Anionen X^{⊖} sind beispielsweise C₁₋₃-Alkanoate, C₁₋₄-Alkanphosphonate, C₁₋₄-Alkansulfonate, C₂₋₃-Hydroxyalkanoate, Phosphit, Sulfaminat, Halogenide, Methosulfat, p-Toluolsulfonat, vorzugsweise solche, die gute Wasserlöslichkeit erzeugen.

Die Salze dieser basischen oder kationischen Verbindungen dienen vor allem zum Aufhellen von Polyacrylnitrilen. Bedingt durch die Struktur und die Art des Anions können sie als konzentrierte wässrige Lösungen z.B. als Handelsformen eingesetzt werden.

Die erfindungsgemässen reduzierend wirkenden Schwefelverbindungen können sowohl organischen wie anorganischen Verbindungsklassen entnommen sein und sind vorzugsweise wasserlöslich. So eignen sich z.B. Dithionite, Pyrosulfite, Sulfite, Sulfide Thiosulfate und Thiocyanate (z.B. Kaliumrhodanid) in Form ihrer Salze (z.B. Alkali-, Erdalkali- oder Ammoniumsalze) als wässrige Lösungen oder auch in fester Form oder soweit bekannt auch in Form der freien Säuren oder deren Anhydride wie z.B. Schwefeldioxid. Als Vertreter organischer Verbindungen seien Mercaptane wie Thioglykolsäure, Mercaptoethanol, 4-Hydroxy-2-mercapto-6-methyl-pyrimidin, Mercaptothiazolin, Thiodialkansäuren wie Thiodipropionsäure, Dithiodialkansäuren wie 3,3'-Dithiodipropionsäure, Sulfinate wie Natriumformaldehydsulfoxylat oder Formamidinsulfinsäure sowie Thioharnstoff genannt. Besonders bevorzugt ist Na-Dithionit.

Die Menge der Schwefelverbindung beträgt 0,1-10 Mol% bezogen auf den Aufheller, vorzugsweise 0,5-5 Mol%.

Gegebenenfalls können der Formulierung weitere Hilfsstoffe zugesetzt werden, wobei es sich um lösungsstabilisierende, hydrotrope Mittel handeln kann oder aber sonstige für die spätere Verwendung der Formulierung vorteilhafte Stoffe.

Erfindungsgemässe Formulierungen erhält man, indem man z.B. die Syntheselösung, den feuchten Filterkuchen oder auch das trockene Pulver eines optischen Aufhellers der Pyrazolinreihe in einer Menge von 10-60 Gew.% bezogen auf das Gesamtgewicht der Formulierung mit 0,1-10 Mol% bezogen auf den Aufheller einer reduzierend wirkenden Schwefelverbindung, Wasser und gegebenenfalls Hilfsstoffe vermischt und homogenisiert. Schwefeldioxid wird direkt in die wässrige Lösung eingeleitet.

Der gewünschte Gehalt an Aufheller in der Lösung kann entweder durch die Zugabe von Wasser, Aufhellerlösung, weiterem trockenen Aufhellerpulver oder sonstigen Hilfsstoffen eingestellt werden. Diese Einstellung kann vor, während oder nach dem Zusatz der Schwefelverbindung vorgenommen werden. Der Anteil des optischen Aufhellers beträgt vorzugsweise 10-30 Gew.% bezogen auf das Gesamtgewicht der Formulierung.

Die erfindungsgemässe Aufhellerformulierung wird beispielsweise zum Aufhellen von Textilien verwendet, vorzugsweise beim Verspinnen von Polyacrylnitril in der Gelphase.

Die erfindungsgemässe Aufhellerformulierung kann auch in ein Waschmittel eingearbeitet werden, z.B. durch Einfliessenlassen der erforderlichen Menge der Lösung aus einem Behälter in eine Mischvorrichtung, die eine Suspension oder Lösung des Waschmittels bzw. des Detergenz enthält.

Die vorliegende Erfindung betrifft demzufolge auch die Verwendung der erfindungsgemässen Aufhellerformulierung zur Herstellung von Waschmitteln, sowie die danach erhaltenen Waschmittel, dadurch gekennzeichnet, dass man eine Suspension für Waschmittel üblicher Detergentien mit einer erfindungsgemässen Lösung von Aufhellern, vermischt und trocknet. Die erhaltenen Suspensionen werden vorteilhaft getrocknet, indem man sie einem Sprühtrocknungsverfahren unterwirft. Weiterhin kann die erfindungsgemässe Aufhellerformulierung zur Herstellung von flüssigen Waschmitteln verwendet werden.

Die folgenden Beispiele erläutern die Erfindung ohne sie darauf zu beschränken. RT bedeutet Raumtemperatur.

Der Grad der Verfärbung ergibt sich aus der Differenz des Wertes der Absorption gemessen bei 465 nm am Anfang des Lagertests und am Ende desselben.

### Beispiel 1: Zu einer wässrigen Lösung enthaltend 18 Gew.% optischen Aufheller der Formel

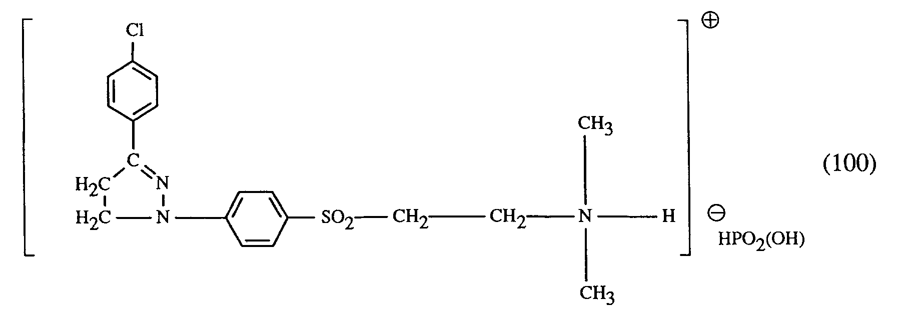

gibt man 5 Mol% Na-Dithionit und homogenisiert.

Die Lösung zeigt auch nach 2monatigem Lagern bei RT keine Verfärbung.

Ähnliche Lagerbeständigkeiten erhält man, wenn man anstelle von Na-Dithionit obiger Lösung eine der folgenden Verbindungen zusetzt: Kaliumrhodanid, Thioglykolsäure, Mercaptoethanol, 4-Hydroxy-2-mercapto-6-methylpyrimidin, 2-Mercaptothiazolin, Natriumformaldehydsulfoxylat, Formamidinsulfinsäure, Thioharnstoff, Thiodipropionsäure oder 3,3'-Dithiodipropionsäure.

### Beispiel 2: Man wiederholt Beispiel 1 setzt jedoch nur 1 Mol% Na-Dithionit zu der Aufhellerlösung zu.

Die Lösung zeigt nach 2monatigem Lagern bei RT nur eine geringe Verfärbung.

### Beispiel 3: Zu einer wässrigen Lösung enthaltend den optischen Aufheller der Formel

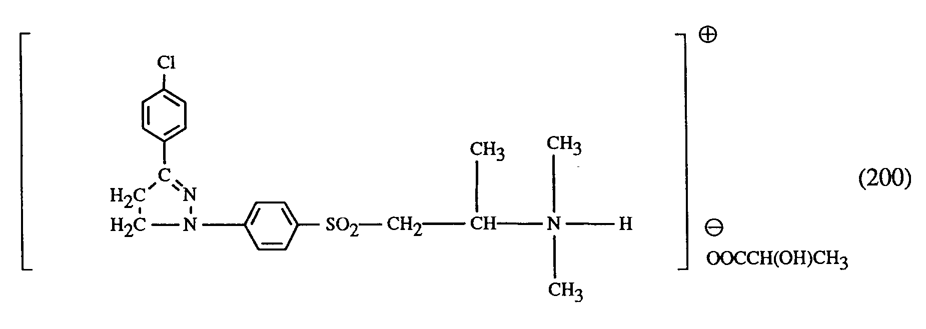

gibt man 5 Mol% Na-Dithionit und homogenisiert.

Die Lösung zeigt auch nach 2monatigem Lagern bei RT keine Verfärbung.

### Beispiel 4: Zu einer wässrigen Lösung enthaltend den optischen Aufheller der Formel

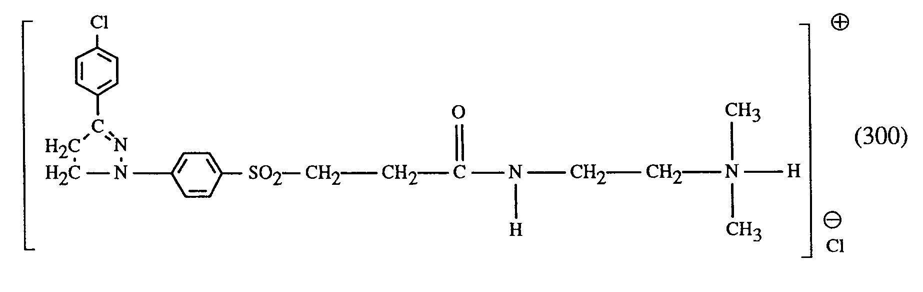

gibt man 5 Mol% Na-Dithionit und homogenisiert.

Die Lösung zeigt auch nach 2monatigem Lagern bei RT keine Verfärbung.

### Beispiel 5: Zu einer wässrigen Lösung enthaltend den optischen Aufheller der Formel

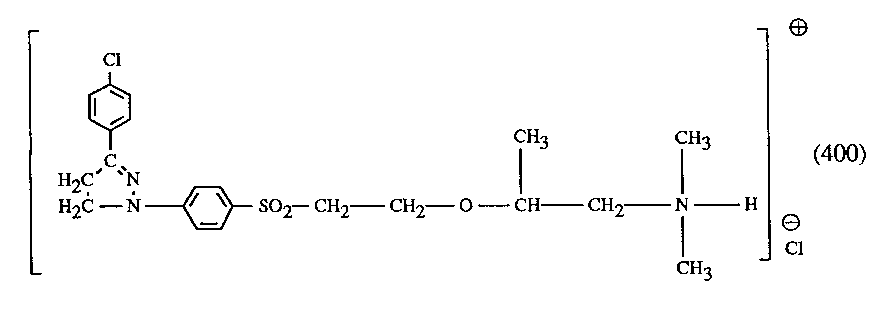

gibt man 5 Mol% Na-Dithionit und homogenisiert.

Die Lösung zeigt auch nach 2monatigem Lagern bei RT keine Verfärbung.

### Vergleichsbeispiel

Gibt man zu einer Lösung des optischen Aufhellers gemäss Beispiel 1 oder 3 keine reduzierend wirkende Schwefelverbindung zu, so zeigen diese Lösungen schon nach 3 Wochen Lagerung eine starke Verfärbung.

## Patentansprüche

1. Lagerstabile Aufhellerformulierung die
a) einen optischen Aufheller der Pyrazolinreihe,
b) gegebenenfalls Hilfsstoffe und
c) Wasser enthält, dadurch gekennzeichnet, dass sie zusätzlich
d) 0,1 - 10 Mol%, bezogen auf den Aufheller, einer reduzierend wirkenden Schwefelverbindung enthält.

2. Lagerstabile Aufhellerformulierung gemäss Anspruch 1, dadurch gekennzeichnet, dass der optische Aufheller der Formel 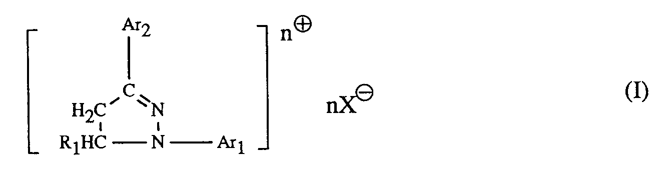 worin Ar₁ und Ar₂ unabhängig voneinander substituierte oder unsubstituierte Arylreste, R₁ Wasserstoff oder Methyl, n Null oder 1 und X ein farbloses Anion bedeuten, entspricht.

3. Lagerstabile Aufhellerformulierung gemäss Anspruch 2, dadurch gekennzeichnet, dass der optische Aufheller der Formel 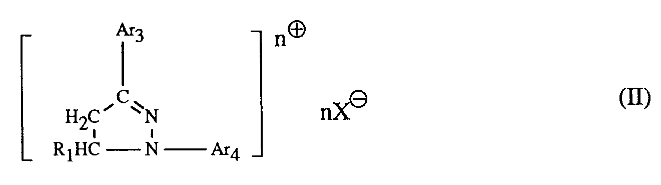 worin Ar₃ und Ar₄ unabhängig voneinander substituierte oder unsubstituierte Phenyl-, Diphenyl- oder Naphthylreste bedeuten, R₁, n und X die gleiche Bedeutung wie in Anspruch 2 haben, entspricht.

4. Lagerstabile Aufhellerformulierung gemäss Anspruch 3, dadurch gekennzeichnet, dass der optische Aufheller der Formel 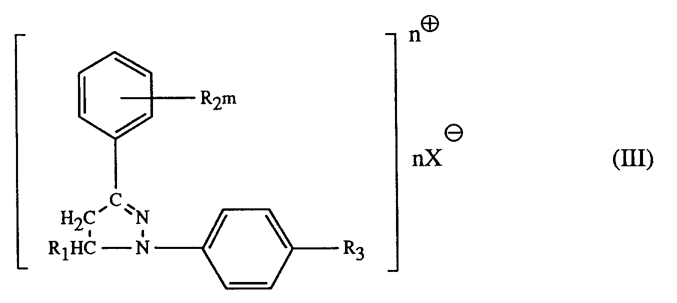 worin R₂ Wasserstoff, Halogen oder C₁-C₆-Alkyl, R₃ eine substituierte oder unsubstituierte C₁-C₆-Alkyloxycarbonyl-, C₁-C₆-Alkylsulfonyl-, Sulfonamid- oder eine Sulfonyl-Gruppe, m Null, 1, 2 oder 3 bedeuten, und R₁, n und X die gleiche Bedeutung wie in Anspruch 2 haben, entspricht.

5. Lagerstabile Aufhellerformulierung gemäss Anspruch 4, dadurch gekennzeichnet, dass der optische Aufheller der Formel 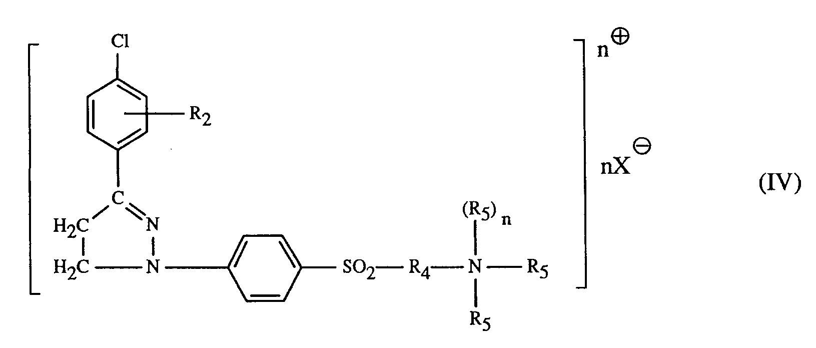 worin R₄ substituiertes oder unsubstituiertes C₁-C₆-Alkyl, C₁-C₆-Alkylen-oxy-C₁-C₆-alkylen, C₁-C₆-Alkylen-CONH-C₁-C₆-alkylen und R₅ unabhängig voneinander substituiertes oder unsubstituiertes C₁-C₆-Alkyl oder Wasserstoff bedeutet und R₂, n und X die Bedeutung gemäss Anspruch 4 haben, entspricht.

6. Lagerstabile Aufhellerformulierung, dass sie
a) einen kationischen, optischen Aufheller der Reihe der 1,3-Dipheny-2-pyrazoline
b) gegebenenfalls Hilfsstoffe und
c) Wasser enthält, dadurch gekennzeichnet, dass sie zusätzlich
d) 0,1 - 10 Mol%, bezogen auf den Aufheller, einer oder mehrerer reduzierend wirkenden Schwefelverbindungen enthält.

7. Lagerstabile Aufhellerformulierung gemäss Anspruch 6, dadurch gekennzeichnet, dass der optische Aufheller der Formel 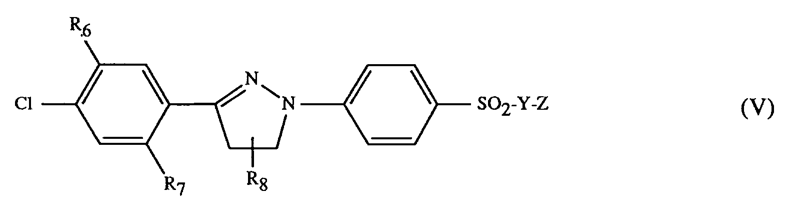 wobei Y ein Brückenglied und Z eine protonierte oder quaternierte Dialkylamino-, Di-(hydroxyäthyl)amino-, Morpholino-, Pyrrolidino-, Piperidino-, N-Alkylpiperazino-, N-Hydroxyäthyl-piperazino- oder eine Alkylmercaptogruppe,
Y geradkettige oder verzweigte Alkylen-, Sulfonyl-, Sulfonamid-, Carbonamid-, Carboxyl-, Amino-, Hydroxyalkylen-gruppen,
R₆ und R₇ unabhängig voneinander H, Methyl oder Chlor und
R₈ C₁-C₄-Alkyl oder Phenyl bedeuten, entspricht.

8. Lagerstabile Aufhellerformulierung gemäss Anspruch 7, dadurch gekennzeichnet, dass der optische Aufheller der Formel 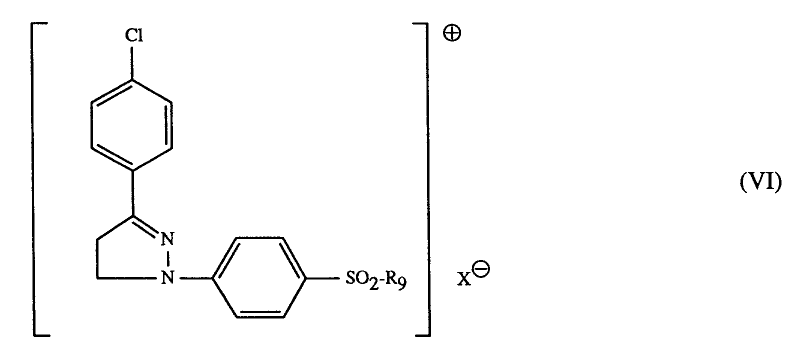 worin R₉ ein basischer Rest 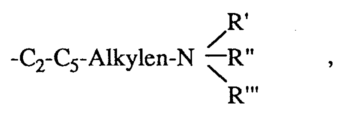 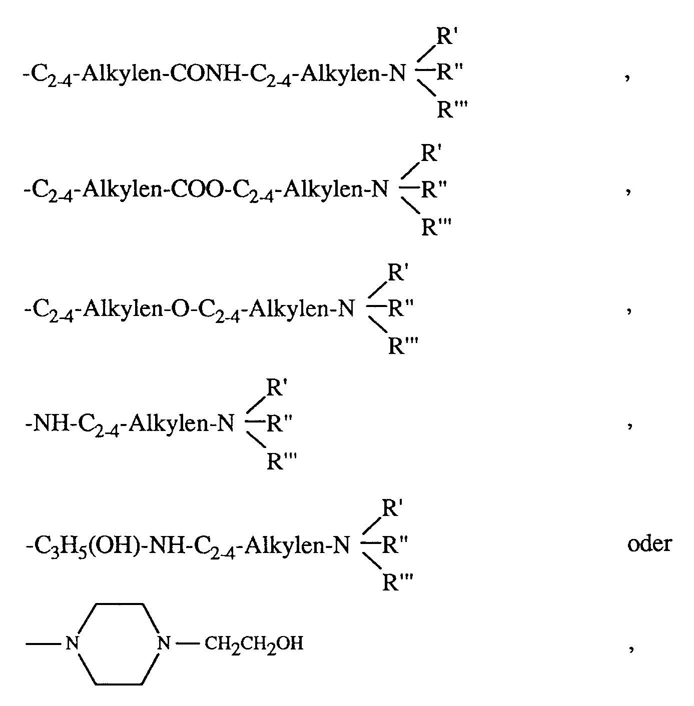 X⁻ ein farbloses Anion einer organischen oder anorganischen Säure, R', R'', R''' unabhängig voneinander H, -CH₃, -C₂H₅ oder -CH₂CH₂OH, wovon 2 Reste zusammen auch einen Pyrrolidin-, Piperidin-, N-Methylpiperazin- oder Morpholinring bilden können, bedeuten, entspricht.

9. Lagerstabile Aufhelleiformulierung gemäss einem der Ansprüche 1-8, dadurch gekennzeichnet, dass die Schwefelverbindung aus der Gruppe der Dithionit-, Thiosulfat-, Thiocyanat-, Sulfit- und Pyrosulfitalkali-, erdalkali oder -ammoniumsalze oder auch soweit bekannt der freien Säuren, oder Mercaptanen,Sulfinaten,Thiodialkansäuren oder Dithiodialkansäuren ausgewählt wird.

10. Lagerstabile Aufhellerformulierung gemäss Anspruch 9, dadurch gekennzeichnet, dass die Schwefelverbindung aus der Gruppe Na-Dithionit, Kaliumrhodanid, Thioglykolsäure, Mercaptoethanol, 4-Hydroxy-2-mercapto-6-methylpyrimidin, 2-Mercaptothiazolin, Natriumformaldehydsulfoxylat, Formamidinsulfinsäure, Thioharnstoff, Thiodipropionsäure oder 3,3'-Dithiodipropionsäure ausgewählt wird.

11. Lagerstabile Aufhellerformulierung gemäss Anspruch 10, dadurch gekennzeichnet, dass die Schwefelverbindung in einer Menge von 0,5-5 Mol% bezogen auf den Aufheller zugesetzt wird.

12. Lagerstabile Aufhellerformulierung gemäss Anspruch 11, dadurch gekennzeichnet, dass die Schwefelverbindung Na-Dithionit ist.

13. Lagerstabile Aufhellerformulierung gemäss Anspruch 1, die
a) 18 Gew.% eines optischen Aufhellers der Formel 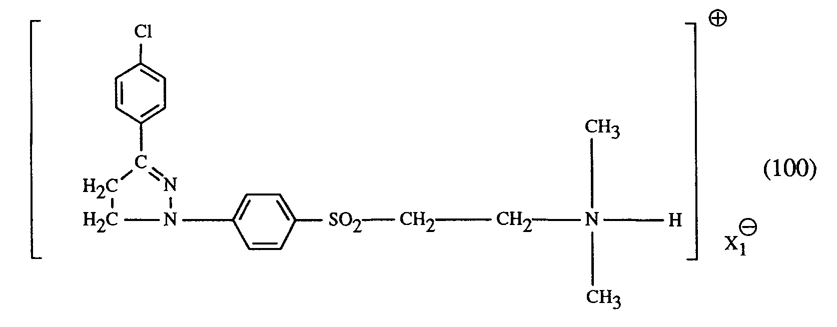 worin X₁^{⊖} HPO₂(OH) oder HCOO bedeutet,
b) gegebenenfalls Hilfsstoffe und
c) Wasser enthält, dadurch gekennzeichnet, dass sie zusätzlich
d) 5 Mol% Na-Dithionit enthält.

14. Lagerstabile Aufhellerformulierung gemäss Anspruch 1, die
a) einen optischen Aufheller der Formel 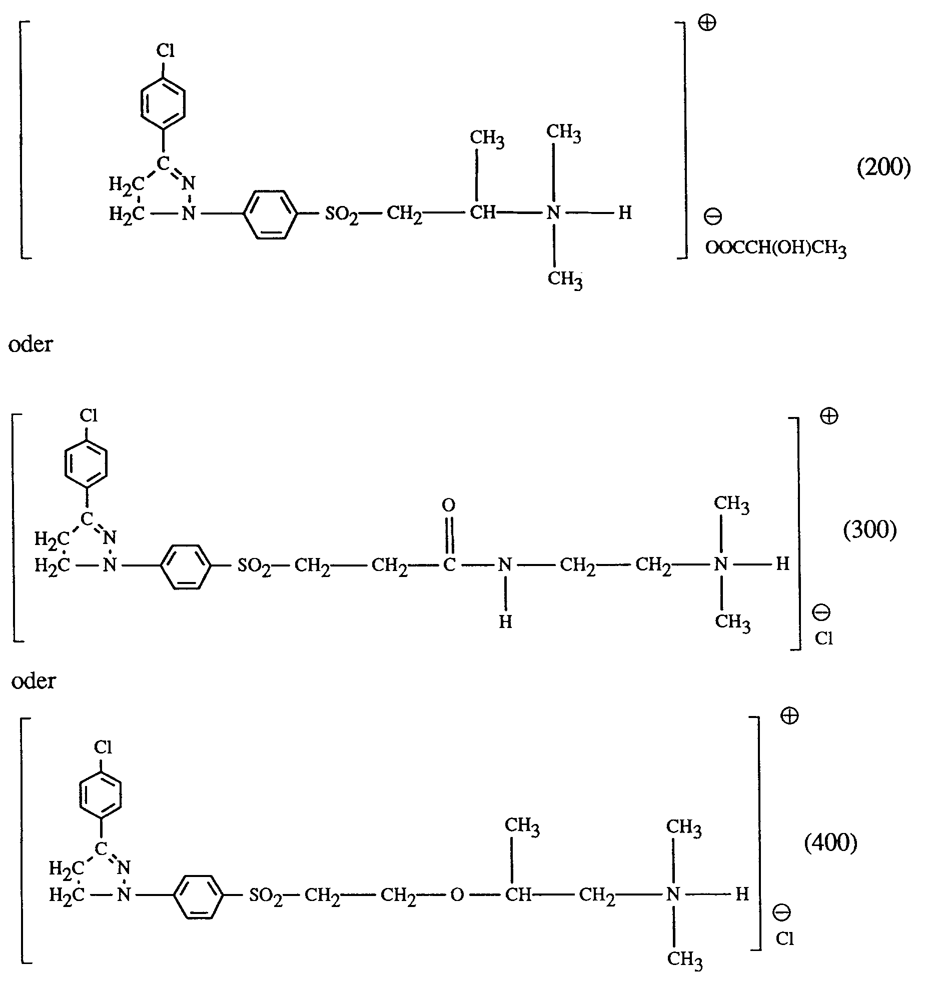
b) gegebenenfalls Hilfsstoffe und
c) Wasser enthält, dadurch gekennzeichnet, dass sie zusätzlich
d) 0,5-5 Mol% Na-Dithionit enthält.

15. Verfahren zur Herstellung lagerstabiler Aufhellerformulierungen nach einem der Ansprüche 1-14, dadurch gekennzeichnet, dass man den optischen Aufheller der Pyrazolinreihe in einer Menge von 10-60 Gew.% bezogen auf das Gesamtgewicht der Formulierung mit 0,1-10 Mol% bezogen auf den Aufheller einer reduzierend wirkenden Schwefelverbindung, Wasser und gegebenenfalls Hilfsstoffe vermischt und homogenisiert.

16. Verwendung der lagerstabilen Aufhellerformulierungen nach einem der Ansprüche 1-14 zur Aufhellung von Textilien.

17. Verwendung der lagerstabilen Aufhellerformulierungen nach einem der Ansprüche 1-14 zur Herstellung von Waschmitteln.

## Claims

1. A storage-stable brightener formulation which contains
a) a fluorescent brightener of the pyrazoline series,
b) if appropriate, auxiliaries and
c) water, and which additionally comprises
d) 0.1-10 mol %, relative to the brightener, of a reducing sulfur compound.

2. A storage-stable brightener formulation according to claim 1, wherein the fluorescent brightener has the formula 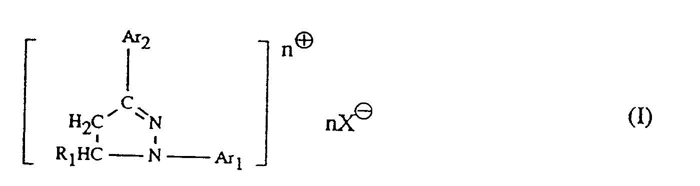 in which Ar₁ and Ar₂, independently of one another, are substituted or unsubstituted aryl radicals, R₁ is hydrogen or methyl, n is zero or 1 and X is a colourless anion.

3. A storage-stable brightener formulation according to claim 2, wherein the fluorescent brightener has the formula 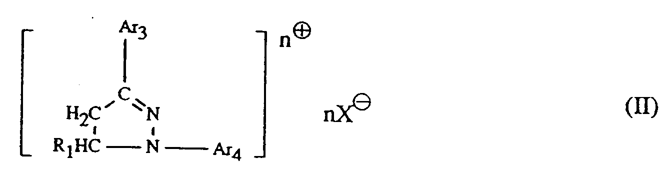 in which Ar₃ and Ar₄, independently of one another, are substituted or unsubstituted phenyl, diphenyl or naphthyl radicals, R₁, n and X are as defined in claim 2.

4. A storage-stable brightener formulation according to claim 3, wherein the fluorescent brightener has the formula 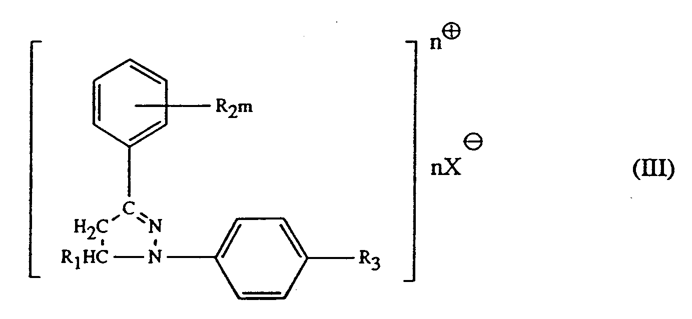 in which R₂ is hydrogen, halogen or C₁-C₆alkyl, R₃ is a substituted or unsubstituted C₁-C₆alkylcarbonyl, C₁-C₆alkylsulfonyl, sulfonamido or a sulfonyl group, m is zero, 1, 2 or 3, and R₁, n and X are as defined in claim 2.

5. A storage-stable brightener formulation according to claim 4, wherein the fluorescent brightener has the formula 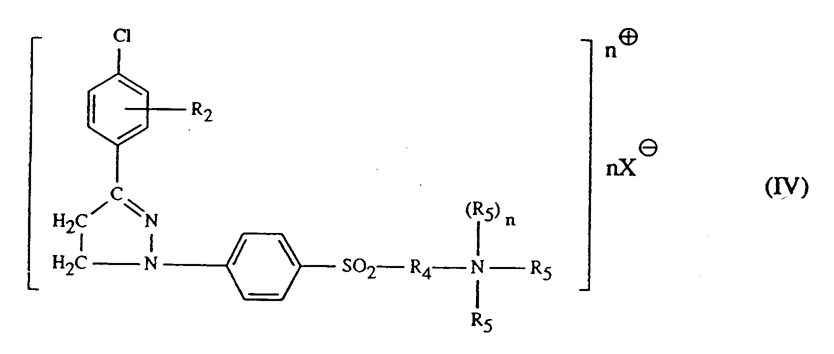 in which R₄ is substituted or unsubstituted C₁-C₆alkyl, C₁-C₆alkyleneoxy-C₁-C₆alkylene, C₁-C₆alkylene-CONH-C₁-C₆alkylene and the R₅, independently of one another, are substituted or unsubstituted C₁-C₆alkyl or hydrogen, and R₂, n and X are as defined in claim 4.

6. A storage-stable brightener formulation which contains
a) a cationic fluorescent brightener of the 1,3-diphenyl-2-pyrazoline series
b) if appropriate, auxiliaries and
c) water, and which additionally comprises
d) 0.1-10 mol %, relative to the brightener, of one or more reducing sulfur compounds.

7. A storage-stable brightener formulation according to claim 6, wherein the fluorescent brightener has the formula 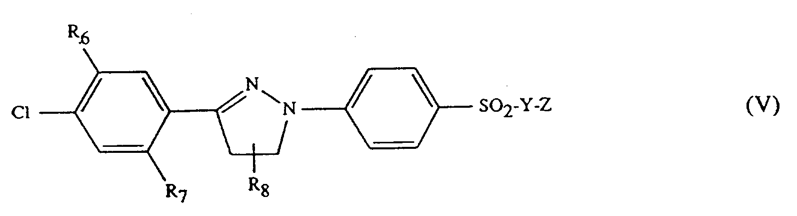 in which Y is a bridge member and Z is a protonated or quaternized dialkylamino, di(hydroxyethyl)amino, morpholino, pyrrolidino, piperidino, N-alkylpiperazino, N-hydroxyethylpiperazino or an alkylmercapto group, Y is a straight-chain or branched alkylene, sulfonyl, sulfonamido, carboxamido, carboxyl, amino, hydroxyalkylene group, R₆ and R₇, independently of one another, are H, methyl or chlorine and R₈ is C₁-C₄alkyl or phenyl.

8. A storage-stable brightener formulation according to claim 7, wherein the fluorescent brightener has the formula 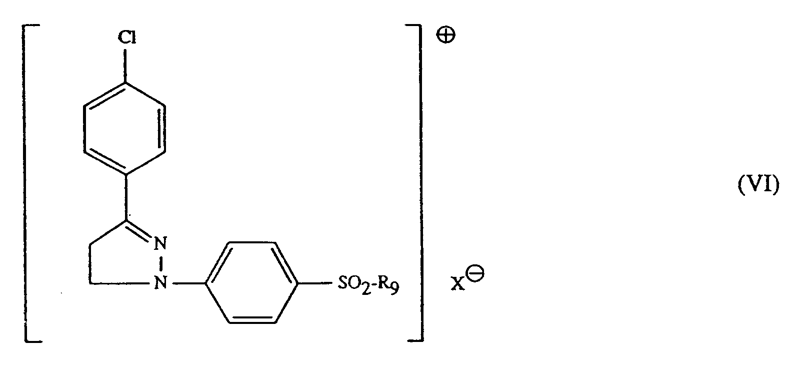 in which R₉ is a basic radical 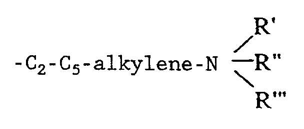 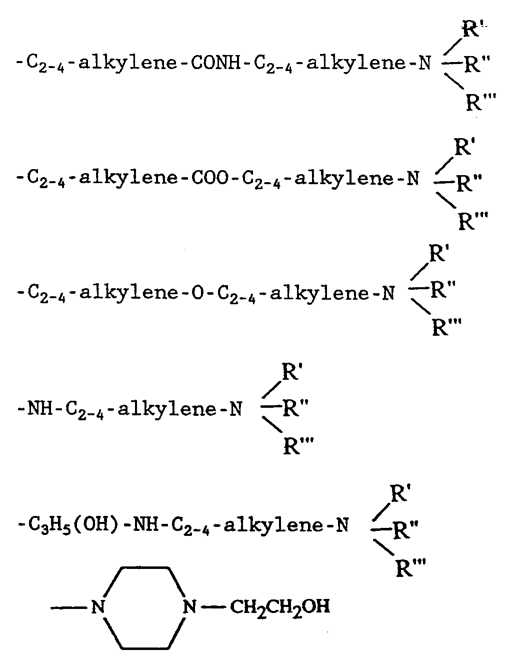 X⁻ is a colourless anion of an organic or inorganic acid, R', R'', R''', independently of one another, is H, -CH₃, -C₂H₅ or -CH₂CH₂OH, of which 2 radicals together can also form a pyrrolidine, piperidine, N-methylpiperazine or morpholine ring.

9. A storage-stable brightener formulation according to any one of claims 1-8, wherein the sulfur compound is selected from the group consisting of dithionite, thiosulfate, thiocyanate, sulfite and pyrosulfite alkali metal salts, alkaline earth metal salts or ammonium salts or, if known, of the free acids, or mercaptans, sulfinites, thiodialkanoic acids or dithiodialkanoic acids.

10. A storage-stable brightener formulation according to claim 9, wherein the sulfur compound is selected from the group consisting of Na dithionite, potassium thiocyanate, thioglycolic acid, mercaptoethanol, 4-hydroxy-2-mercapto-6-methylpyrimidine, 2-mercaptothiazoline, sodium formaldehyde sulfoxylate, formamidinosulfinic acid, thiourea, thiodipropionic acid or 3,3'-dithiodipropionic acid.

11. A storage-stable brightener formulation according to claim 10, wherein the sulfur compound is added in an amount of 0.5-5 mol %, relative to the brightener.

12. A storage-stable brightener formulation according to claim 11, wherein the sulfur compound is Na dithionite.

13. A storage-stable brightener formulation according to claim 1 which contains
a) 18 % by weight of a fluorescent brightener of the formula 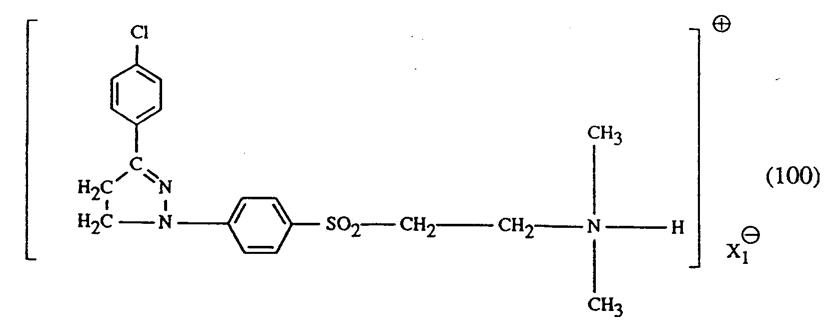 in which X₁- is HPO₂(OH) or HCOO,
b) if appropriate, auxiliaries and
c) water, and which additionally comprises
d) 5 mol % of Na dithionite.

14. A storage-stable brightener formulation according to claim 1 which contains
a) a fluorescent brightener of the formula 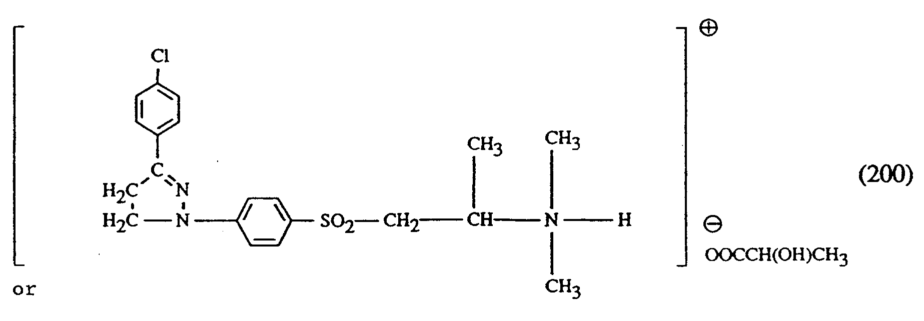 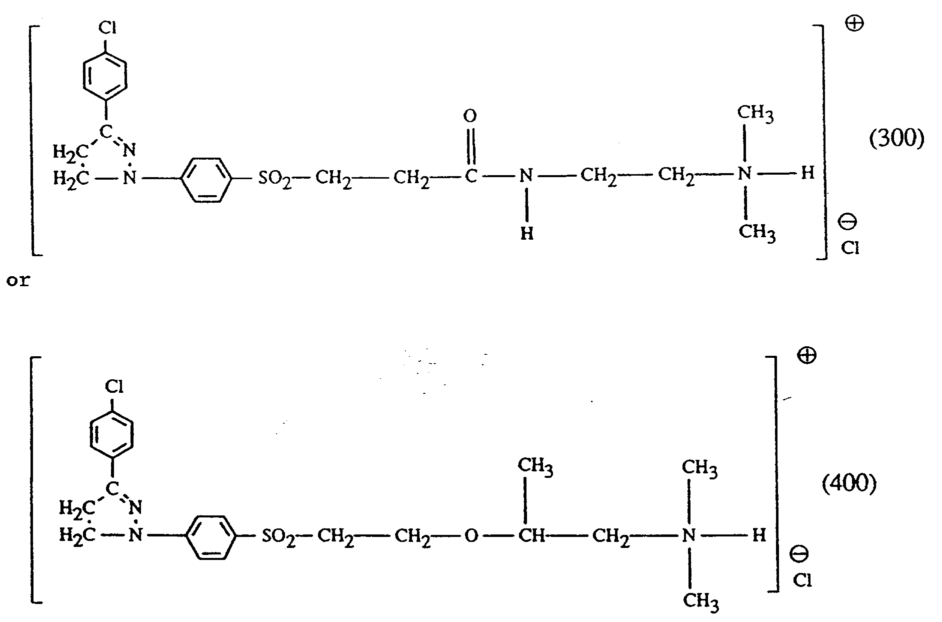
b) if appropriate, auxiliaries and
c) water, and which additionally comprises
d) 0.5-5 mol % of Na dithionite.

15. A process for the preparation of storage-stable brightener formulations according to any one of claims 1-14, wherein the fluorescent brightener of the pyrazoline series is mixed in an amount of 10-60 % by weight, relative to the total weight of the formulation, with 0.1-10 mol %, relative to the brightener, of a reducing sulfur compound, water and, if appropriate, auxiliaries, and the mixture is homogenized.

16. Use of a storage-stable brightener formulation according to any one of claims 1-14 for the brightening of textiles.

17. Use of a storage-stable brightener formulation according to any one of claims 1-14 for the preparation of detergents.

## Revendications

1. Formulation d'azurant optique, stable en magasin, qui contient
a) un azurant optique de la série des pyrazolines,
b) d'éventuels adjuvants, et
c) de l'eau, caractérisée en qu'elles contient en outre
d) de 0,1 à 10 % en moles, par rapport à l'azurant optique, d'un composé réducteur soufré.

2. Formulation d'azurant optique, stable en magasin, conforme à la revendication 1, caractérisée en ce que l'azurant optique correspond à la formule 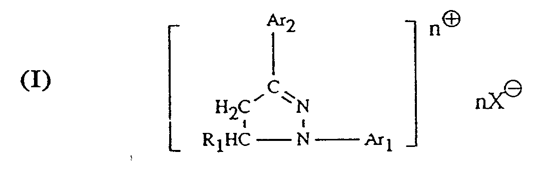 dans laquelle Ar₁ et Ar₂ représentent chacun, indépendamment l'un de l'autre, un groupe aryle portant ou non des substituants, R₁ représente un atome d'hydrogène ou un groupe méthyle, n vaut 0 ou 1 et X représente un anion incolore.

3. Formulation d'azurant optique, stable en magasin, conforme à la revendication 2, caractérisée en ce que l'azurant optique correspond à la formule 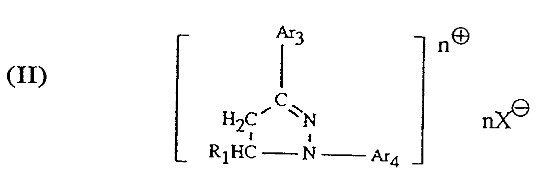 dans laquelle Ar₃ et Ar₄ représentent chacun, indépendamment l'un de l'autre, un groupe phényle, diphényle ou naphtyle, portant ou non des substituants, et R₁, n et X ont les mêmes significations que dans la revendication 2.

4. Formulation d'azurant optique, stable en magasin, conforme à la revendication 3, caractérisée en ce que l'azurant optique correspond à la formule 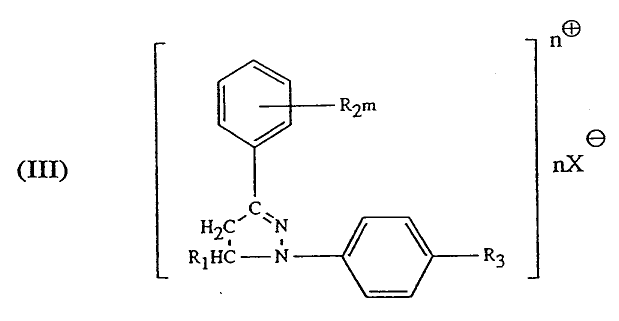 dans laquelle R₂ représente un atome d'hydrogène ou d'halogène ou un groupe alkyle en C₁₋₆, R₃ représente un groupe sulfonamido, sulfonyle, (alcoxy en C₁₋₆)-carbonyle ou (alkyle en C₁₋₆)-sulfonyle, portant ou non des substituants, m vaut 0, 1,2 ou 3, et R₁, n et X ont les mêmes significations que dans la revendication 2.

5. Formulation d'azurant optique, stable en magasin, conforme à la revendication 4, caractérisée en ce que l'azurant optique correspond à la formule 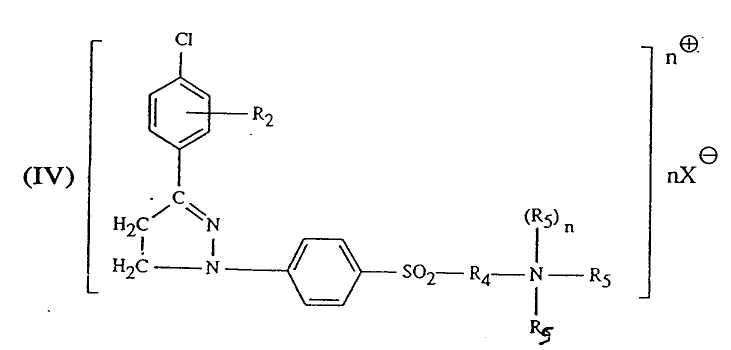 dans laquelle R₄ représente un groupe alkylène en C₁₋₆, (alkylène en C₁₋₆)-oxy-(alkylène en C₁₋₆), (alkylène en C₁₋₆)-CONH-(alkylène en C₁₋₆), portant ou non des substituants, les symboles R₅ représentent chacun, indépendamment les uns des autres, un atome d'hydrogène ou un groupe alkyle en C₁₋₆ portant ou non des substituants, et R₂, n et X ont les mêmes significations que dans la revendication 4.

6. Formulation d'azurant optique, stable en magasin, qui contient
a) un azurant optique cationique de la série des 1,3-diphényl-2-pyrazolines,
b) d'éventuels adjuvants, et
c) de l'eau, caractérisée en ce qu'elle contient en outre
d) de 0,1 à 10 % en moles, par rapport à I'azurant optique, d'un ou de plusieurs composés réducteurs soufrés.

7. Formulation d'azurant optique, stable en magasin, conforme à la revendication 6, caractérisée en ce que l'azurant optique correspond à la formule 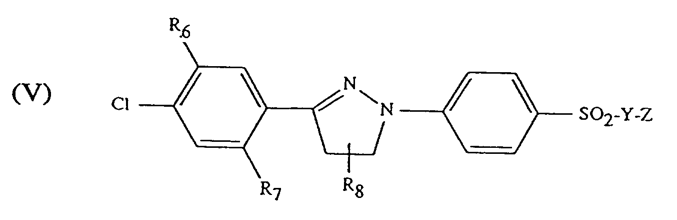 dans laquelle Y représente un chaînon pontant et Z représente un groupe dialkyl-amino, di(hydroxyéthyl)amino, morpholino, pyrrolidino, pipéridino, N-alkyl-pipérazino, N-hydroxyéthyl-pipérazino ou alkylthio, quaternisé ou protoné,
Y représente un groupe alkylène à chaîne droite ou ramifiée, ou un groupe sulfonyle, sulfonamido, carbonamido, carbonyloxy, amino ou hydroxyalkylène,
R₆ et R₇ représentent chacun, indépendamment l'un de l'autre, un atome d'hydrogène ou de chlore ou un groupe méthyle, et
R₈ représente un groupe alkyle en C₁₋₄ ou phényle.

8. Formulation d'azurant optique, stable en magasin, conforme à la revendication 7, caractérisée en ce que l'azurant optique correspond à la formule 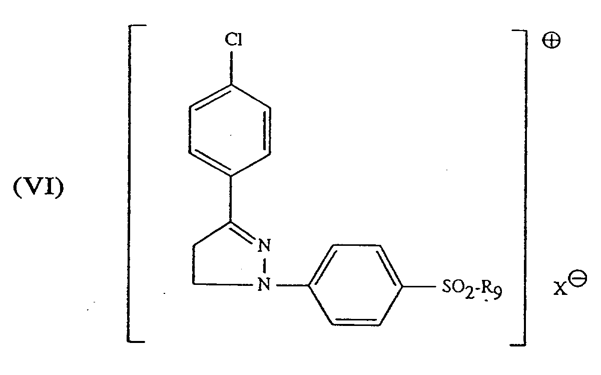 dans laquelle R₉ représente un groupe basique de type 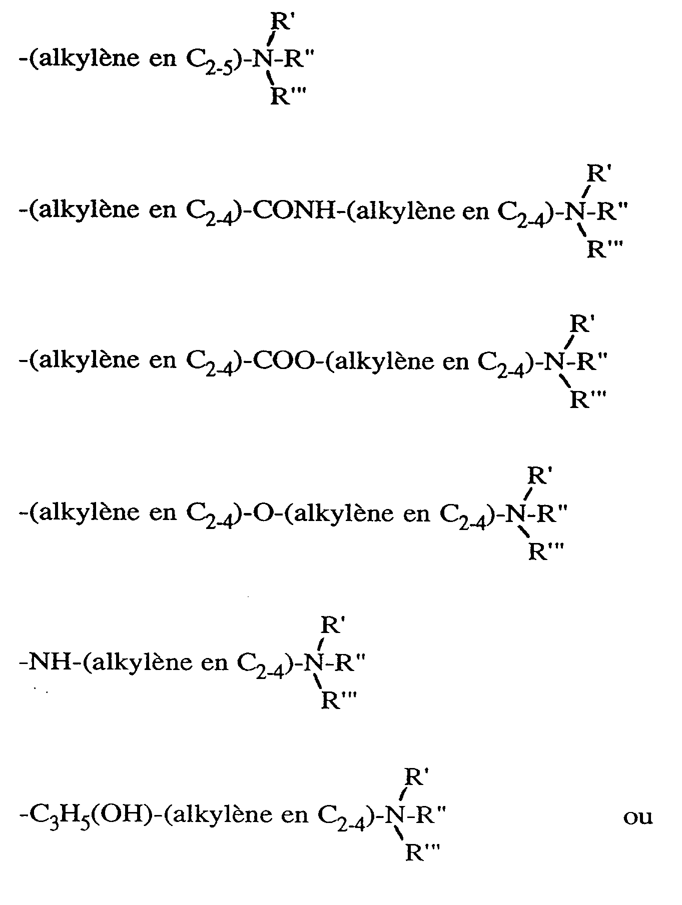 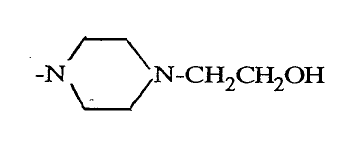 X⁻ représente un anion incolore dérivé d'un acide organique ou minéral, et R', R'' et R''' représentent chacun, indépendamment l'un de l'autre, un atome d'hydrogène ou un groupe -CH₃, -C₂H₅ ou -CH₂CH₂OH, deux de ces symboles pouvant aussi former ensemble un cycle de pyrrolidine, pipéridine, N-méthyl-pipérazine ou morpholine.

9. Formulation d'azurant optique, stable en magasin, conforme à l'une des revendications 1 à 8, caractérisée en ce que le composé soufré est choisi dans l'ensemble que constituent les hydrosulfites, anhydrosulfites, sulfites, thiosulfates et thiocyanates d'ammonium ou de métal alcalin ou alcalino-terreux, les acides libres correspondants (s'ils existent), et les mercaptans, sulfinates, acides thio-dialcanoïques et acides dithio-dialcanoïques.

10. Formulation d'azurant optique, stable en magasin, conforme à la revendication 9, caractérisée en ce que le composé soufré est choisi dans l'ensemble que constituent l'hydrosulfite de sodium, le thiocyanate de potassium, l'acide thioglycolique, le mercapto-éthanol, la 4-hydroxy-2-mercapto-6-méthyl-pyrimidine, la 2-mercaptothiazoline, le sulfoxylate-formaldéhyde sodique, le sulfinate de formamidine, la thiourée, l'acide thiodipropionique et l'acide 3,3'-dithiodipropionique.

11. Formulation d'azurant optique, stable en magasin, conforme à la revendication 10, caractérisée en ce que l'on ajoute le composé soufré en une proportion de 0,5 à 5 % en moles, par rapport à l'azurant optique.

12. Formulation d'azurant optique, stable en magasin, conforme à la revendication 11, caractérisée en ce que le composé soufré est de l'hydrosulfite de sodium.

13. Formulation d'azurant optique, stable en magasin, conforme à la revendication 1, qui contient
a) 18 % en poids d'un azurant optique de formule 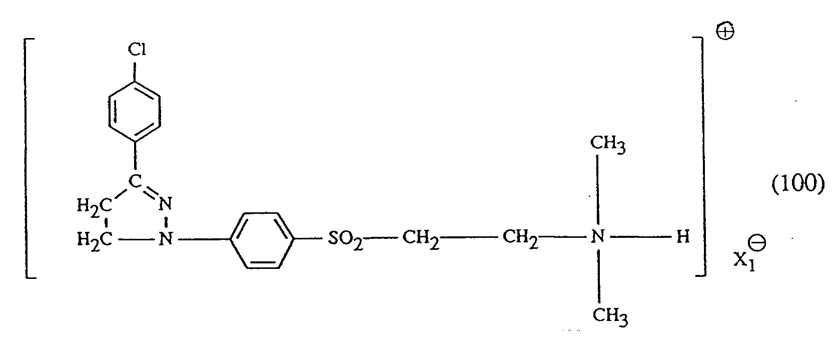 dans laquelle X₁⁻ représente HPO₂(OH)⁻ ou HCOO⁻
b) d'éventuels adjuvants, et
c) de l'eau, caractérisée en ce qu'elle contient en outre
d) 5 % en moles d'hydrosulfite de sodium.

14. Formulation d'azurant optique, stable en magasin, conforme à la revendication 1, qui contient
a) un azurant optique de formule 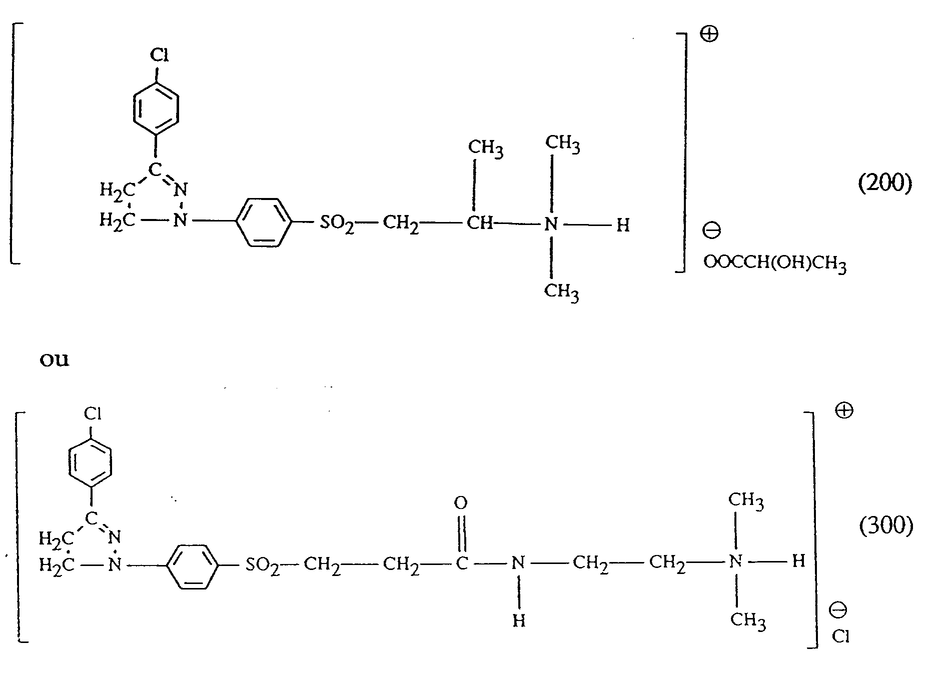 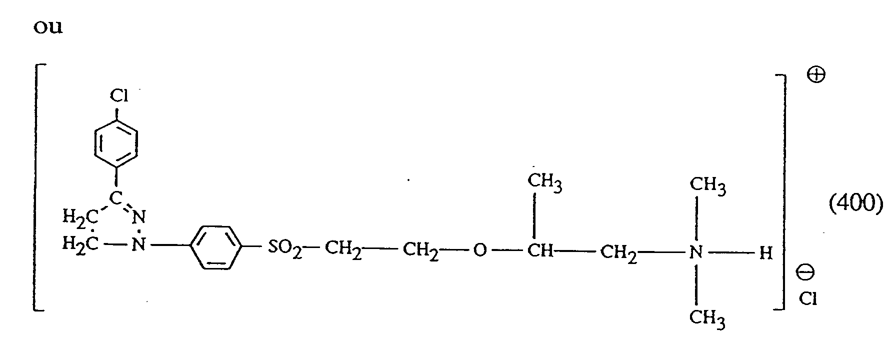
b) d'éventuels adjuvants, et
c) de l'eau, caractérisée en ce qu'elle contient en outre
d) de 0,5 à 5 % en moles d'hydrosulfite de sodium.

15. Procédé de fabrication d'une formulation d'azurant optique, stable en magasin, conforme à l'une des revendications 1 à 14, caractérisé en ce que l'on mélange, à un azurant optique de la série des pyrazolines, se trouvant en une proportion de 10 à 60 % en poids par rapport au poids total de la formulation, de 0,1 à 10 % en moles, par rapport à l'azurant optique, d'un composé soufré réducteur, de l'eau et, le cas échéant, des adjuvants, et on homogénéise le tout.

16. Emploi d'une formulation d'azurant optique, stable en magasin, conforme à l'une des revendications 1 à 14, pour l'azurage de matières textiles.

17. Emploi d'une formulation d'azurant optique, stable en magasin, conforme à l'une des revendications 1 à 14, pour la fabrication de détergents.
